# EUROPEAN PATENT SPECIFICATION

(11) **EP 3 640 936 B1**
(45) Date of publication and mention of the grant of the patent: **10.01.2024**
(21) Application number: 18885100.0
(22) Date of filing: 14.08.2018
(51) Int. Cl.: G10L 15/30, H04W 4/80, H04L 67/025, G10L 15/22

(54) **APPARATUS CONTROL DEVICE, METHOD, AND APPARATUS HAVING SAME**
GERÄTESTEUERUNGSVORRICHTUNG, VERFAHREN UND VORRICHTUNG DAMIT
DISPOSITIF DE COMMANDE D'APPAREIL, PROCÉDÉ ET APPAREIL COMPORTANT CELUI-CI

(30) Priority: 08.12.2017 CN 201711299071
(43) Date of publication of application: 22.04.2020
(73) Proprietor: Gree Electric Appliances (Wuhan) Co., Ltd., Wuhan, Hubei 430056 (CN); Gree Electric Appliances, Inc. of Zhuhai, Zhuhai, Guangdong 519070 (CN)
(72) Inventor: CHEN, Daoyuan, Zhuhai Guangdong 519070 (CN); SONG, Dechao, Zhuhai Guangdong 519070 (CN); LI, Yufei, Zhuhai Guangdong 519070 (CN)
(74) Representative: Nevett, Duncan
(86) International application number: PCT/CN2018/100382
(87) International publication number: WO 2019/109660

(56) References cited:
- WO-A1-2017/001932
- CN-A- 105 161 110
- CN-A- 106 230 671
- CN-A- 106 533 851
- CN-A- 106 600 935
- CN-A- 108 231 072
- CN-U- 206 542 613
- CN-U- 206 674 269
- US-A1- 2002 077 095
- US-A1- 2016 165 387
- US-B1- 9 788 144
- US-B2- 7 260 538

## Description

The present application is a National Stage Application of International Patent Application No. PCT/CN2018/100382, filed on August 14, 2018, which is based on and claims priority of China Patent Application No. 201711299071.6 filed on December 8, 2017.

### TECHNICAL FIELD

The present disclosure relates to the field of control, and in particular, to a device control apparatus, a method, and a device comprising the apparatus.

### BACKGROUND

At present, home appliances have more and more functions. For example, many appliances have voice control function and Bluetooth function. Most of these appliances only have a single voice function or a single Bluetooth function, and in a few cases have both a voice function and a Bluetooth function. Bluetooth-enabled products usually use traditional BT (Bluetooth) instead of MESH (Wireless Mesh Network), so that voice technology and MESH technology cannot cooperate with each other to play a greater role. In general, a voice control system can only control a single home appliance by voice control instructions, and multiple home appliances cannot be operated and controlled in a unified manner, which brings inconvenience to users. An example of such a system can be found in US 2002/077095 A1 which teaches processing of speech/vocal commands within a Bluetooth network. A remote device control has speech input capabilities. The speech is transmitted to a Bluetooth-enabled platform which itself forwards the speech for remote ASR processing and for controlling a device.

### SUMMARY

The invention is defined in the independent claims. Preferred embodiments are defined in the dependent claims.

The embodiments of the present disclosure provide a device control apparatus, a method, and a device comprising the apparatus, to solve the problem that multiple home appliances cannot be uniformly operated and controlled.

The technical solution provided in the embodiments of the present disclosure integrates voice control technology and Bluetooth MESH network technology, and can remotely control all target devices through voice control instructions, thereby facilitating unified operation and control by users. Both local and online recognition of voice control instructions can be adopted, and thereby higher recognition accuracy and faster response can be achieved. Instructions recognized through online voice recognition are converted into Bluetooth MESH instructions. Only a WIFI device in a gateway is connected to a router, and there is no need to connect all target devices to the router, thereby greatly reducing the burden on the router. Information in the network is broadcasted in broadcast packets, which can be forwarded indefinitely by intermediate nodes, achieving an infinite propagation distance in theory. Bluetooth is provided in every device such as a mobile phone, and has great potential for subsequent applications. The Bluetooth MESH network can adopt automatic frequency hopping technology, which can adapt to various complicated environments.

### BRIEF DESCRIPTION OF THE DRAWINGS

The accompanying drawings, which are included to provide a further understanding of the disclosure and are incorporated in and constitute a part of this specification, illustrate embodiments of the disclosure, and together with the illustrative embodiments of the present disclosure serve to explain the present disclosure, but are not limitation thereof. In the drawings:
FIG. 1 is an overall frame diagram of a device control apparatus according to an embodiment of the present disclosure;
FIG. 2 is a schematic structural diagram of the device control apparatus according to an embodiment of the present disclosure;
FIG. 3 is a flowchart of steps of a device control method according to an embodiments of the present disclosure;
FIG. 4 is a flowchart of steps of the device control method according to an embodiment of the present disclosure;
FIG. 5 is a flowchart of steps of the device control method according to another embodiment of the present disclosure.

### DETAILED DESCRIPTION

In order to make the objectives, technical solutions, and advantages of the present disclosure more clear, the technical solutions of the present disclosure will be described clearly and completely in combination with specific embodiments and corresponding drawings of the present disclosure.

It should be noted that the terms "first" , "second" and the like in the description and claims and the drawings of the present disclosure are used to distinguish similar objects, and are not necessarily used to describe a specific order or sequence. It should be understood that the terms so used may be interchanged where appropriate so that the embodiments of the disclosure described herein can be implemented in an order other than those illustrated or described herein. Furthermore, the terms "including" and "comprising" and any of their variations are intended to cover non-exclusive inclusions, for example, a process, method, system, product, or device that comprises a series of steps or units need not be limited to those explicitly listed, instead it can comprise other steps or units not explicitly listed or inherent to this process, method, product or device.

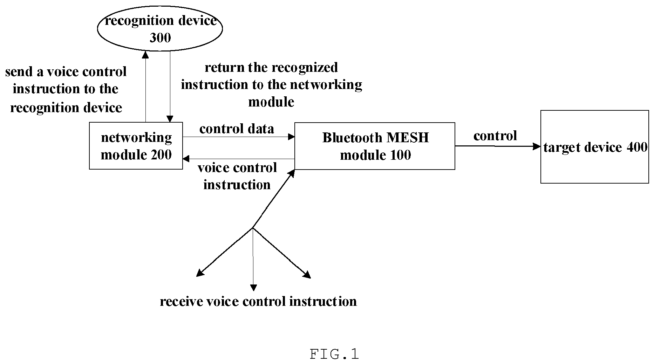

An embodiment of the present disclosure provides a device control apparatus. FIG. 1 is an overall frame diagram of a device control apparatus according to an embodiment of the present disclosure. As shown in FIG. 1, the device control apparatus in the embodiment of the present disclosure comprises a Bluetooth MESH module 100 and a networking module 200. The Bluetooth MESH module 100 is configured to receive a voice control instruction, and send the received voice control instruction to the networking module. The networking module 200 is configured to send the received voice control instruction to a recognition device 300 for voice recognition, and send control data to the Bluetooth MESH module 100 according to a recognition result returned from the recognition device 300. The Bluetooth MESH module 100 is further configured to send the control data from the networking module 200 to a target device 400 to implement control of the target device.

The technical solution provided in the embodiment of the present disclosure integrates a networking module, a Bluetooth MESH module, and a voice function into the same home appliance system, so that a user can remotely control all devices through voice control instructions. Wherein the networking module may adopt a WIFI module, which can convert an instruction recognized through online voice recognition into a Bluetooth MESH instruction, so as to control all home appliances in the network. The technical solution provided in the embodiment of the present disclosure has the following beneficial effects: 1) only a WIFI device in a gateway is connected to a router, and there is no need to connect all target devices to the router, thereby greatly reducing the burden on the router; 2) information in the network is broadcasted in broadcast packets, which can be forwarded indefinitely by intermediate nodes, achieving an infinite propagation distance in theory; 3) Bluetooth is provided in common device, and has great potential for subsequent applications; 4) the Bluetooth MESH network can adopt automatic frequency hopping technology, which can adapt to various complicated environments.

According to an implementation of the device control apparatus provided in an embodiment of the present disclosure, the recognition device comprises at least one of a server or a local recognition module. In one case, voice control instructions are processed by the server which can recognize any command. In another case without network accessing, voice control instructions can also be recognized locally by the local recognition module, and then other home appliances can be controlled by Bluetooth MESH. In still another case, both local and online recognition of voice control instructions can be adopted, thereby achieving higher accuracy and faster response.

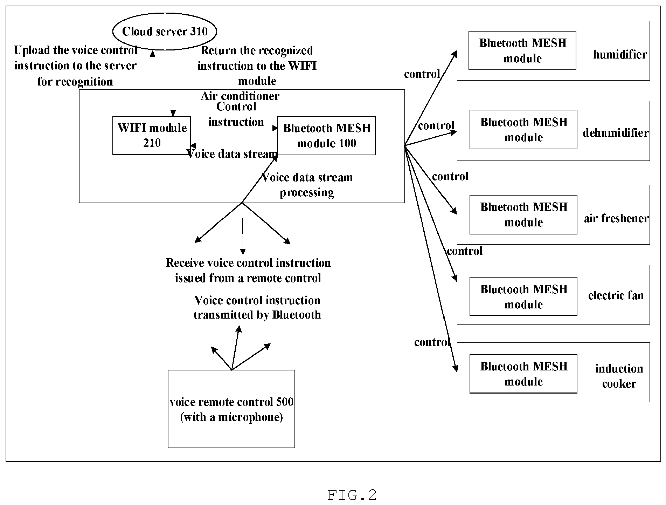

FIG. 2 is a schematic structural diagram of the device control apparatus according to an embodiment of the present disclosure. As shown in FIG. 2, the networking module is a WIFI module 210 and the recognition device is a cloud server 310. One home appliance in the home appliance system can serve as a control center. In the embodiment shown in FIG. 2, an air conditioner serves as a control center. A Bluetooth MESH module 100 and a WIFI module 210 are provided in the air conditioner.

According to an embodiment of the device control apparatus of the present disclosure, the voice control instruction is issued from a voice remote control or a terminal and is sent to the Bluetooth MESH module through a Bluetooth MESH network. As shown in FIG. 2, a voice remote control 500 equipped with a microphone is used to send a voice control instruction through Bluetooth. In addition to an infrared receiver, the voice remote control also has a Bluetooth MESH and a microphone. The infrared receiver can process common key control information. When the voice function is utilized by a user, a voice control instruction is input through the microphone and is transmitted to the air conditioner through the Bluetooth MESH function. In this case, the air conditioner is the control center of the entire home appliance system. In another case, a voice control instruction can be sent through an APP on a terminal device having a Bluetooth function, such as a mobile phone. For home appliance system having a voice function, a WIFI function and a Bluetooth MESH function, all the home appliances in the control system can not only be controlled by an APP, but also be controlled by inputting voice control instruction through a voice remote control.

According to an embodiment of the device control apparatus according to the present disclosure, the Bluetooth MESH module is connected to the networking module through a data transmission interface, the data transmission interface comprising a UART interface, a USB interface or a SPI interface. For example, the application of the UART interface's protocol is simple, and a chip may comprise multiple UART interfaces to achieve good scalability.

According to an embodiment of the device control apparatus of the present disclosure, the Bluetooth MESH module comprises a data processing sub-module, configured to perform at least one of data compressing, filtering, or encoding processing on the received voice control instruction, wherein the encoding processing is used to convert the voice control instruction into a code recognizable by the networking module. Data compressing is used to extract useful parts from an audio stream that takes up a lot of space to reduce memory occupation. Filtering is used to filter out interference parts in the audio signal.

As shown in FIG. 2, after receiving a voice data stream sent through Bluetooth, the WIFI module 210 uploads the voice data stream to a cloud server 310 by WIFI for recognition processing.

According to an embodiment of the device control apparatus of the present disclosure, the recognition device is configured to: receive the voice control instruction from the networking module; analyze the received voice control instruction and extract a feature code; and return the extracted feature code to the networking module as a recognition result. As shown in FIG. 2, the recognition device is a cloud server 310. After receiving the voice data stream uploaded by WIFI, the cloud server extracts a feature code from the voice data stream, compares it with a database, and returns an analyzed data feature value to the WIFI module 210 for processing.

According to an embodiment of the device control apparatus of the present disclosure, the networking module is further configured to: receive a feature code returned from the recognition device; obtain the control data corresponding to the feature code from a pre-stored control database, wherein the database comprises the correspondence relationship of the feature code and the control data; and send the control data to the Bluetooth MESH module. As shown in FIG. 2, the networking module is a WIFI module 210. After receiving the data feature value recognized by the cloud server, the WIFI module 210 obtains a specific control instruction corresponding to the data feature value from a local instruction database, and then sends it to the Bluetooth MESH module 100 through a serial port such as a UART interface.

According to an embodiment of the device control apparatus of the present disclosure, the Bluetooth MESH module 100 is further configured to broadcast the control data from the networking module in a Bluetooth MESH network to send the control data to the target device or forward the control data to the target device via an intermediate device.

As shown in FIG. 2, the target device comprises a humidifier, a dehumidifier, an air freshener, an electric fan, and an induction cooker. A Bluetooth MESH module is also provided in the target device. After receiving the specific control data, the Bluetooth MESH module 100 in the air conditioner broadcasts the control data in the MESH network. The control data can also be continuously forwarded between the home appliances and eventually reach a target home appliance which being the target device, and then is received by the MESH module in the target device. For example, an instruction is sent from a gateway in the air conditioner to an electric fan. Due to a longer distance to the electric fan, the instruction cannot directly reach the electric fan. A dehumidifier located between the air conditioner and the fan receives the broadcast message in a broadcast packet from the air conditioner. After finding that the dehumidifier is not the target of the message, the dehumidifier broadcasts the message again. Due to a shorter distance between the dehumidifier and the fan, the electric fan can receive the message. Each home appliance has a unique ID number as it is connected to the network, and each broadcast message contains the target's ID number. Once receiving a broadcast message, a home appliance will compare the ID number in the message with its own ID number to determine if the home appliance is the target of the message. If it is determined that the home appliance is not the target of the message, the message will be broadcasted again.

According to an embodiment of the device control apparatus of the present disclosure, the Bluetooth MESH module 100 is further configured to perform the following steps: receive a response instruction returned from the target device, the response instruction being an instruction returned from the target device after executing a control instruction corresponding to the control data; and re-send the control data if no response instruction is received from the target device within a preset time threshold after the control data has been sent. Specifically, after receiving a specific control instruction, the Bluetooth MESH module of the target home appliance executes the relevant instruction and makes a response; an execution cycle is closed after the Bluetooth MESH module in the air conditioner receives a response instruction returned from the target home appliance.

According to an embodiment of the device control apparatus of the present disclosure, the Bluetooth MESH module 100 is further configured to perform at least one of setting a communication error flag or prompting a communication error message if no response instruction is received from the target device within a preset time threshold after the control data has been sent for N consecutive times, wherein N is a preset number-of-times threshold. For example, after sending the control information, the Bluetooth MESH module in the air conditioner will retransmit the control information if no response is received within a certain period of time, and a communication error flag will be set if no response is received after three times of re-transmission.

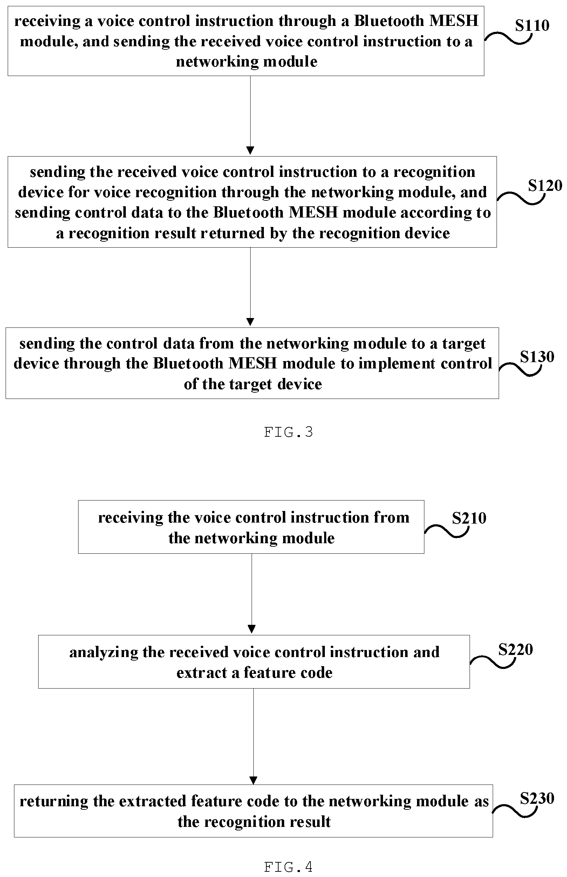

According to an embodiment of the device control apparatus of the present disclosure, the target device comprises: at least one of a humidifier, a dehumidifier, an air freshener, an electric fan, an induction cooker, a refrigerator, a television, a washing machine, a microwave oven, an electric oven, a kitchen ventilator, a lighting lamp, a stereo system, a camera device, or a voice device. According to an embodiment of the device control apparatus of the present disclosure, the intermediate device comprises: at least one of a humidifier, a dehumidifier, an air freshener, an electric fan, an induction cooker, a refrigerator, a television, a washing machine, a microwave oven, an electric oven, a kitchen ventilator, a lighting lamp, a stereo system, a camera device, or a voice device.
Another aspect of the embodiments of the present disclosure provides a device control method. FIG. 3 is a flowchart of the steps of the device control method according to an embodiments of the present disclosure. As shown in FIGS. 1 to 3, the device control method of the present disclosure comprises: receiving a voice control instruction through a Bluetooth MESH module 100, and sending the received voice control instruction to a networking module 200, for example, perform the step S110; sending the received voice control instruction to a recognition device 300 for voice recognition through the networking module 200, and sending control data to the Bluetooth MESH module 100 according to a recognition result returned from the recognition device 300, for example, perform the step S120; and sending the control data from the networking module 200 to a target device 400 through the Bluetooth MESH module 100 to implement control of the target device 400, for example, perform the step S130.

According to an embodiment of the device control method of the present disclosure, the recognition device 300 comprises at least one of a server or a local recognition module.

According to an embodiment of the device control method of the present disclosure, the voice control instruction is issued from a voice remote control or a terminal, and is sent to the Bluetooth MESH module 100 through a Bluetooth MESH network.

According to an embodiment of the device control method of the present disclosure, the Bluetooth MESH module 100 is connected to the networking module 200 through a data transmission interface, the data transmission interface comprising a UART interface, a USB interface or a SPI interface.

According to an embodiment of the device control method of the present disclosure, the method further comprises: performing at least one of data compressing, filtering, or encoding processing on the received voice control instruction after receiving the voice control instruction and before sending the received voice control instruction to the networking module, wherein the encoding processing is used to convert the voice control instruction into a code recognizable by the networking module.

FIG. 4 is a flowchart of the steps of the device control method according to an embodiment of the present disclosure. As shown in FIGS. 1 to 4, according to an embodiment of the device control method of the present disclosure, the recognition device 300 is configured to: receive the voice control instruction from the networking module, for example, perform the step S210; analyze the received voice control instruction and extract a feature code, for example, perform the step S220; return the extracted feature code to the networking module as the recognition result, for example, perform the step S230.

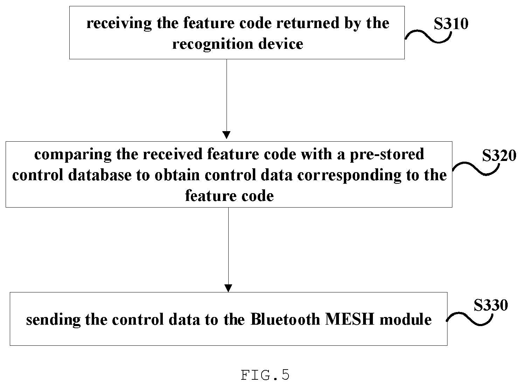

FIG. 5 is a flowchart of steps of the device control method according to another embodiment of the present disclosure. As shown in FIG. 1 to 5, according to an embodiment of the device control method of the present disclosure, sending control data to the Bluetooth MESH module according to a recognition result returned from the recognition device comprises: receiving the feature code returned from the recognition device, for example, perform the step S310; obtaining the control data corresponding to the feature code from a pre-stored control database, for example, perform the step S320; sending the control data to the Bluetooth MESH module, for example, perform the step S330.

According to an embodiment of the device control method of the present disclosure, sending the control data from the networking module to a target device comprises: broadcasting the control data from the networking module in a Bluetooth MESH network to send the control data to the target device or forwarding the control data to the target device via an intermediate device.

According to an embodiment of the device control method of the present disclosure, the method further comprises the following steps: receiving a response instruction returned from the target device through the Bluetooth MESH module after sending the control data from the networking module to the target device, the response instruction being an instruction returned from the target device after executing a control instruction corresponding to the control data; and re-sending the control data through the Bluetooth MESH module if no response instruction is received from the target device within a preset time threshold after the control data has been sent.

According to an embodiment of the device control method of the present disclosure, the method further comprises: at least one of setting a communication error flag or prompting a communication error message if no response instruction is received from the target device within a preset time threshold after the control data has been sent for N consecutive times, wherein N is a preset number-of-times threshold.

According to an embodiment of the device control method of the present disclosure, the target device comprises: at least one of a humidifier, a dehumidifier, an air freshener, an electric fan, an induction cooker, a refrigerator, a television, a washing machine, a microwave oven, an electric oven, a kitchen ventilator, a lighting lamp, a stereo system, a camera device, or a voice device. According to an embodiment of the device control method of the present disclosure, the intermediate device comprises at least one of a humidifier, a dehumidifier, an air freshener, an electric fan, an induction cooker, a refrigerator, a television, a washing machine, a microwave oven, an electric oven, a kitchen ventilator, a lighting lamp, a stereo system, a camera device, or a voice device.

According to still another aspect of the embodiments of the present disclosure, a device is provided, comprising the apparatus described in any of the above embodiments.

According to a further aspect of the embodiments of the present disclosure, a device is provided, comprising a processor, a memory, and a computer program stored on the memory and executable on the processor, wherein the processor implements the steps of the method according to any one of the above embodiments when executing the program.

According to an embodiment of the device of the present disclosure, the device comprises an air conditioner.

The technical solution provided in the embodiments of the present disclosure integrates voice control technology and Bluetooth MESH network technology, and can remotely control all target devices through voice control instructions, thereby facilitating unified operation and control by users. Both local and online recognition of voice control instructions can be adopted, and thereby higher recognition accuracy and faster response can be achieved. Instructions recognized through online voice recognition are converted into Bluetooth MESH instructions. Only a WIFI device in a gateway is connected to a router, and there is no need to connect all target devices to the router, thereby greatly reducing the burden on the router. Information in the network is broadcasted in broadcast packets, which can be forwarded indefinitely by intermediate nodes, achieving an infinite propagation distance in theory. Bluetooth is provided in common device such as a mobile phone, and has great potential for subsequent applications. The Bluetooth MESH network can adopt automatic frequency hopping technology, which can adapt to various complicated environments.

The functions described herein may be implemented in hardware, software executed by a processor, or any combination thereof. If implemented in software by processor, the functions may be stored on or transmitted over as one or more instructions or code on a computer-readable medium. Other examples and embodiments are within the scope and spirit of the disclosure and appended claims. For example, due to the nature of software, functions described above can be implemented using software executed by a processor, hardware, firmware, hardwiring, or combinations of any of these. In addition, various functional units may be integrated into one processing unit, or may exist separately, or two or more units may be integrated into one unit.

In the several embodiments provided by this disclosure, it should be understood that the disclosed technical content can be implemented in other ways. The apparatus embodiments described above are only schematic. For example, the division of the units may be a logical function division. In actual implementation, there may be other division manners. For example, multiple units or components may be combined or may be integrated into another system, or some features can be ignored or not implemented. In addition, the displayed or discussed mutual coupling or direct coupling or communication connection may be indirect coupling or a communication connection through some interfaces, units or modules, and may be electrical or in other forms.

The units described as separate components may or may not be physically separated, and the component as the control device may or may not be a physical unit, may be located in one place, or may be distributed on multiple units. Some or all of the units may be selected according to actual needs to implement the solution of this embodiment. As for the method embodiment, since it basically corresponds to the apparatus embodiment, the description is relatively simple. For related parts, reference may be made to the part of the apparatus embodiment.

If the integrated unit is implemented in the form of a software functional unit and sold or used as an independent product, it may be stored in a computer-readable storage medium. Based on this understanding, the technical solution of the present disclosure essentially or in other word, a portion thereof that contributes to the related technology or all or part of the technical solution can be embodied in the form of a software product, which is stored in a storage medium, comprising instructions to cause a computer device which may be a personal computer, a server, or a network device, etc. to perform all or part of the steps of the method described in the various embodiments of the present disclosure. The foregoing storage media comprise: U disks, Read-Only Memory (ROM), Random Access Memory (RAM), mobile hard disks, magnetic disks, or optical disks and other media that can store program code.

The above description is only embodiments of the present disclosure and is not intended to limit the present disclosure. For those skilled in the art, the present disclosure may have various modifications and changes.

### PRACTICAL APPLICABILITY

In the embodiments of the present disclosure, through integrating voice control technology with Bluetooth MESH network technology, all target devices can be controlled through voice control instructions, thereby facilitating unified operation and control by users. Both local and online recognition of voice control instructions can be adopted, and thereby higher recognition accuracy and faster response can be achieved. Instructions recognized through online voice recognition are converted into Bluetooth MESH instructions. Only a WIFI device in a gateway is connected to a router, and there is no need to connect all target devices to the router, thereby greatly reducing the burden on the router. Information in the network is broadcasted in broadcast packets, which can be forwarded indefinitely by intermediate nodes, achieving an infinite propagation distance in theory. Bluetooth is provided in common device such as a mobile phone, and has great potential for subsequent applications. The Bluetooth MESH network can adopt automatic frequency hopping technology, which can adapt to various complicated environments.

## Claims

1. An air conditioner, comprising a device control apparatus, the device control apparatus comprising a Bluetooth MESH module and a networking module, wherein:
the Bluetooth MESH module is configured to receive a voice control instruction, and send the received voice control instruction to the networking module;
the networking module is configured to send the received voice control instruction to a recognition device for voice recognition, and send control data to the Bluetooth MESH module according to a recognition result returned from the recognition device; and
the Bluetooth MESH module is further configured to: broadcast the control data from the networking module in a Bluetooth MESH network to forward the control data to a target device via an intermediate device to implement control of the target device, wherein the intermediate device and the target device are home appliances;
the Bluetooth MESH module is further configured to: receive a response instruction returned from the target device, the response instruction being an instruction returned from the target device after executing a control instruction corresponding to the control data; and re-send the control data if no response instruction is received from the target device within a preset time threshold after the control data has been sent.

2. The air conditioner according to claim 1, wherein the recognition device comprises at least one of a server or a local recognition module.

3. The air conditioner according to claim 1 or 2, wherein the voice control instruction is issued from a voice remote control or a terminal and is sent to the Bluetooth MESH module through a Bluetooth MESH network.

4. The air conditioner according to any one of claims 1 to 3, wherein the Bluetooth MESH module is connected to the networking module through a data transmission interface, the data transmission interface comprising a UART interface, a USB interface or a SPI interface.

5. The air conditioner according to any one of claims 1 to 4, wherein the Bluetooth MESH module comprises a data processing sub-module, the data processing sub-module being configured to perform at least one of data compressing, filtering, or encoding processing on the received voice control instruction, wherein the encoding processing is used to convert the voice control instruction into a code recognizable by the networking module.

6. The air conditioner according to any one of claims 1 to 5, wherein the networking module is further configured to:
receive a feature code returned from the recognition device, wherein the feature code is extracted, by the recognition device, by analyzing the received voice control instruction sent from the networking module;
obtain the control data corresponding to the feature code from a pre-stored control database; and
send the control data to the Bluetooth MESH module.

7. The air conditioner according to any one of claims 1 to 6, wherein the Bluetooth MESH module is further configured to perform at least one of setting a communication error flag or prompting a communication error message if no response instruction is received from the target device within a preset time threshold after the control data has been sent for N consecutive times, wherein N is a preset number-of-times threshold.

8. The air conditioner according to any one of claims 1 to 7, wherein at least one of the target device or the intermediate device comprises at least one of a humidifier, a dehumidifier, an air freshener, an electric fan, an induction cooker, a refrigerator, a television, a washing machine, a microwave oven, an electric oven, a kitchen ventilator, a lighting lamp, a stereo system, a camera device, or a voice device.

9. A device control method, **characterized by** comprising:
receiving a voice control instruction through a Bluetooth MESH module of an air conditioner, and sending the received voice control instruction to a networking module of the air conditioner;
sending the received voice control instruction to a recognition device for voice recognition through the networking module, and sending control data to the Bluetooth MESH module according to a recognition result returned from the recognition device; and
broadcasting the control data from the networking module in a Bluetooth MESH network to forward the control data to the target device via an intermediate device through the Bluetooth MESH module to implement control of the target device, wherein the intermediate device and the target device are home appliances;
receiving a response instruction returned from the target device, the response instruction being an instruction returned from the target device after executing a control instruction corresponding to the control data; and
re-sending the control data if no response instruction is received from the target device within a preset time threshold after the control data has been sent.

10. An air conditioner **characterized by** comprising a processor, a memory, and a computer program stored on the memory and executable on the processor, wherein the processor is configured to implement the steps of the method according to claim 9 when executing the computer program.

## Patentansprüche

1. Klimaanlage, die eine Gerätesteuervorrichtung beinhaltet, wobei die Gerätesteuervorrichtung ein Bluetooth MESH-Modul und ein Vernetzungsmodul beinhaltet, wobei:
das Bluetooth MESH-Modul zum Empfangen eines Sprachsteuerungsbefehls und zum Senden des empfangenen Sprachsteuerungsbefehls an das Vernetzungsmodul konfiguriert ist;
das Vernetzungsmodul zum Senden des empfangenen Sprachsteuerungsbefehls an eine Erkennungsvorrichtung für Spracherkennung und zum Senden von Steuerungsdaten an das MESH-Modul gemäß einem von der Erkennungsvorrichtung zurückgemeldeten Erkennungsergebnis konfiguriert ist; und
das Bluetooth MESH-Modul ferner konfiguriert ist zum: Verteilen der Steuerungsdaten vom Vernetzungsmodul in einem Bluetooth MESH-Netzwerk zum Weiterleiten der Steuerungsdaten an eine Zielvorrichtung über eine Zwischenvorrichtung, um die Steuerung der Zielvorrichtung zu realisieren, wobei die Zwischenvorrichtung und die Zielvorrichtung Haushaltsgeräte sind;
das Bluetooth MESH-Modul ferner konfiguriert ist zum: Empfangen eines von der Zielvorrichtung zurückgemeldeten Antwortbefehls, wobei der Antwortbefehl ein Befehl ist, der von der Zielvorrichtung nach Ausführen eines den Steuerungsdaten entsprechenden Steuerbefehls zurückgemeldet wird; und erneutes Senden der Steuerungsdaten, wenn von der Zielvorrichtung innerhalb einer vorgegebenen Zeitschwelle nach Senden der Steuerungsdaten kein Antwortbefehl empfangen wird.

2. Klimaanlage nach Anspruch 1, wobei die Erkennungsvorrichtung einen Server und/oder ein lokales Erkennungsmodul beinhaltet.

3. Klimaanlage nach Anspruch 1 oder 2, wobei der Sprachsteuerungsbefehl von einer Sprachfernbedienung oder einem Endgerät ausgegeben wird und durch ein Bluetooth MESH-Netzwerk an das Bluetooth MESH-Modul gesendet wird.

4. Klimaanlage nach einem der Ansprüche 1 bis 3, wobei das Bluetooth MESH-Modul durch eine Datenübertragungsschnittstelle mit dem Vernetzungsmodul verbunden ist, wobei die Datenübertragungsschnittstelle eine UART-Schnittstelle, eine USB-Schnittstelle oder eine SPI-Schnittstelle beinhaltet.

5. Klimaanlage nach einem der Ansprüche 1 bis 4, wobei das Bluetooth MESH-Modul ein Datenverarbeitungsuntermodul beinhaltet, wobei das Datenverarbeitungsuntermodul zum Durchführen von wenigstens einem von Komprimieren, Filtern oder Kodierungsverarbeiten von Daten an dem empfangenen Sprachsteuerungsbefehl konfiguriert ist, wobei das Kodierungsverarbeiten zum Umsetzen des Sprachsteuerungsbefehls in einen vom Vernetzungsmodul erkennbaren Code verwendet wird.

6. Klimaanlage nach einem der Ansprüche 1 bis 5, wobei das Vernetzungsmodul ferner konfiguriert ist zum:
Empfangen eines von der Erkennungsvorrichtung zurückgemeldeten Merkmalscodes, wobei der Merkmalscode von der Erkennungsvorrichtung durch Analysieren des vom Vernetzungsmodul gesendeten empfangenen Sprachsteuerungsbefehls entnommen wird;
Erhalten der Steuerungsdaten, die dem Merkmalscode entsprechen, aus einer vorgespeicherten Steuerungsdatenbank; und
Senden der Steuerungsdaten an das Bluetooth MESH-Modul.

7. Klimaanlage nach einem der Ansprüche 1 bis 6, wobei das Bluetooth MESH-Modul ferner zum Durchführen des Setzens eines Kommunikationsfehlerflags und/oder des Ausgebens einer Kommunikationsfehlermeldung, wenn innerhalb eines voreingestellten Zeitschwellenwerts nach N-maligem Senden der Steuerungsdaten nacheinander kein Antwortbefehl von der Zielvorrichtung empfangen wird, wobei N ein voreingestellter Schwellenwert für die Anzahl der Male ist.

8. Klimaanlage nach einem der Ansprüche 1 bis 7, wobei wenigstens eine von der Zielvorrichtung oder der Zwischenvorrichtung wenigstens eines der folgenden aufweist:
einen Luftbefeuchter, einen Luftentfeuchter, einen Lufterfrischer, einen elektrischen Ventilator, einen Induktionsherd, einen Kühlschrank, ein Fernsehgerät, eine Waschmaschine, einen Mikrowellenherd, einen elektrischen Ofen, einen Küchenventilator, eine Beleuchtungslampe, eine Stereoanlage, ein Kameragerät oder ein Sprachgerät.

9. Gerätesteuerungsverfahren, **dadurch gekennzeichnet, dass** es Folgendes beinhaltet:
Empfangen eines Sprachsteuerungsbefehls durch ein Bluetooth MESH-Modul einer Klimaanlage und Senden des empfangenen Sprachsteuerungsbefehls an ein Vernetzungsmodul der Klimaanlage;
Senden des empfangenen Sprachsteuerungsbefehls an eine Erkennungsvorrichtung für die Spracherkennung durch das Vernetzungsmodul und Senden von Steuerungsdaten an das Bluetooth MESH-Modul gemäß einem von der Erkennungsvorrichtung zurückgemeldeten Erkennungsergebnis; und
Verteilen der Steuerungsdaten vom Vernetzungsmodul in einem Bluetooth MESH-Netzwerk zum Weiterleiten der Steuerungsdaten an die Zielvorrichtung über eine Zwischenvorrichtung durch das Bluetooth MESH-Modul, um die Steuerung der Zielvorrichtung zu realisieren, wobei die Zwischenvorrichtung und die Zielvorrichtung Haushaltsgeräte sind;
Empfangen eines von der Zielvorrichtung zurückgemeldeten Antwortbefehls, wobei der Antwortbefehl ein Befehl ist, der von der Zielvorrichtung nach Ausführen eines den Steuerungsdaten entsprechenden Steuerbefehls zurückgemeldet wird; und
erneutes Senden der Steuerungsdaten, wenn von der Zielvorrichtung innerhalb einer vorgegebenen Zeitschwelle nach Senden der Steuerungsdaten kein Antwortbefehl empfangen wird.

10. Klimaanlage, **gekennzeichnet durch** einen Prozessor, einen Speicher und ein in dem Speicher gespeichertes und auf dem Prozessor ausführbares Computerprogramm, wobei der Prozessor zum Realisieren der Schritte des Verfahrens nach Anspruch 9 beim Ausführen des Computerprogramms konfiguriert ist.

## Revendications

1. Climatiseur, comprenant un appareil de commande de dispositif, l'appareil de commande de dispositif comprenant un module Bluetooth MESH et un module de mise en réseau, dans lequel :
le module Bluetooth MESH est configuré pour recevoir une instruction de commande vocale, et envoyer l'instruction de commande vocale reçue au module de mise en réseau ;
le module de mise en réseau est configuré pour envoyer l'instruction de commande vocale reçue à un dispositif de reconnaissance pour reconnaissance vocale, et envoyer des données de commande au module Bluetooth MESH conformément à un résultat de reconnaissance renvoyé par le dispositif de reconnaissance ; et
le module Bluetooth MESH est configuré en outre pour : diffuser les données de commande du module de mise en réseau dans un réseau Bluetooth MEHS afin d'acheminer les données de commande à un dispositif cible via un dispositif intermédiaire afin de mettre en oeuvre la commande du dispositif cible, dans lequel le dispositif intermédiaire et le dispositif cible sont des appareils domestiques ;
le module Bluetooth MESH est configuré en outre pour : recevoir une instruction en réponse renvoyée du dispositif cible, l'instruction en réponse étant une instruction renvoyée du dispositif cible après avoir exécuté une instruction de commande correspondant aux données de commande ; et envoyer de nouveau les données de commande si aucune instruction en réponse n'est reçue du dispositif cible dans un seuil de temps préréglé après que les données de commande ont été envoyées.

2. Climatiseur selon la revendication 1, dans lequel le dispositif de reconnaissance comprend au moins l'un d'entre un serveur ou un module de reconnaissance local.

3. Climatiseur selon la revendication 1 ou 2, dans lequel l'instruction de commande vocale est émise d'une commande vocale à distance ou d'un terminal et est envoyée au module Bluetooth MESH par un réseau Bluetooth MESH.

4. Climatiseur selon l'une quelconque des revendications 1 à 3, dans lequel le module Bluetooth MESH est connecté au module de mise en réseau par une interface de transmission de données, l'interface de transmission de données comprenant une interface UART, une interface USB ou une interface SPI.

5. Climatiseur selon l'une quelconque des revendications 1 à 4, dans lequel le module Bluetooth MESH comprend un sous-module de traitement de données, le sous-module de traitement de données étant configuré pour effectuer au moins l'un d'entre un traitement de compression, de filtrage ou de codage de données sur l'instruction de commande vocale reçue, dans lequel le traitement de codage est utilisé pour convertir l'instruction de commande vocale en un code reconnaissable par le module de mise en réseau.

6. Climatiseur selon l'une quelconque des revendications 1 à 5, dans lequel le module de mise en réseau est configuré en outre pour :
recevoir un code de caractéristique renvoyé du dispositif de reconnaissance, dans lequel le code de caractéristique est extrait, par le dispositif de reconnaissance, en analysant l'instruction de commande vocale reçue envoyée du module de mise en réseau ;
obtenir les données de commande correspondant au code de caractéristique d'une base de données de commande pré-stockées ; et
envoyer les données de commande au module Bluetooth MESH.

7. Climatiseur selon l'une quelconque des revendications 1 à 6, dans lequel le module Bluetooth MESH est configuré en outre pour effectuer ou moins l'un d'entre régler un drapeau d'erreur de communication ou solliciter un message d'erreur de communication si aucune instruction en réponse n'est reçue du dispositif cible dans un seuil de temps préréglé après que les données de commande ont été envoyées N fois consécutives, dans lequel N est un nombre de fois seuil préréglé.

8. Climatiseur selon l'une quelconque des revendications 1 à 7, dans lequel au moins l'un d'entre le dispositif cible ou le dispositif intermédiaire comprend au moins l'un d'entre un humidificateur, un déshumidificateur, un assainisseur d'air, un ventilateur électrique, une cuisinière à induction, un réfrigérateur, une télévision, une machine à laver, un four à micro-ondes, un four électrique, un ventilateur de cuisine, une lampe d'éclairage, un système stéréo, un dispositif de caméra ou un dispositif vocal.

9. Procédé de commande de dispositif, caractérisé en comprenant :
recevoir une instruction de commande vocale par un module Bluetooth MESH d'un climatiseur, et envoyer l'instruction de commande vocale reçue à un module de mise en réseau du climatiseur ;
envoyer l'instruction de commande vocale reçue à un dispositif de reconnaissance pour reconnaissance vocale par le module de mise en réseau, et envoyer des données de commande au module Bluetooth MESH conformément à un résultat de reconnaissance renvoyé du dispositif de reconnaissance ; et
diffuser les données de commande du module de mise en réseau dans un réseau Bluetooth MESH pour acheminer les données de commande au dispositif cible via un dispositif intermédiaire par le module Bluetooth MESH pour mettre en oeuvre la commande du dispositif cible, dans lequel le dispositif intermédiaire et le dispositif cible sont des appareils domestiques ;
recevoir une instruction en réponse renvoyée du dispositif cible, l'instruction en réponse étant une instruction renvoyée du dispositif cible après avoir exécuté une instruction de commande correspondant aux données de commande ; et
envoyer de nouveau les données de commande si aucune instruction en réponse n'est reçue du dispositif cible dans un seuil de temps préréglé après que les données de commande ont été envoyées.

10. Climatiseur caractérisé en comprenant un processeur, une mémoire et un programme informatique stocké sur la mémoire et exécutable sur le processeur, dans lequel le processeur est configuré pour mettre en oeuvre les étapes du procédé selon la revendication 9 lorsque exécutant le programme informatique.
